# EUROPÄISCHE PATENTSCHRIFT

(11) **EP 2 163 947 B1**
(45) Veröffentlichungstag und Bekanntmachung des Hinweises auf die Patenterteilung: **03.08.2011**
(21) Anmeldenummer: 09011340.8
(22) Anmeldetag: 03.09.2009
(51) Int. Cl.: G03B 11/04, G02B 23/16

(54) **Schutzkappe**
Protection cap
Couvercle de protection

(30) Priorität: 12.09.2008 AT 14242008
(43) Veröffentlichungstag der Anmeldung: 17.03.2010
(73) Patentinhaber: Swarovski-Optik KG, 6067 Absam i. Tirol (AT)
(72) Erfinder: Öttl, Peter, 6068 Mils (AT)
(74) Vertreter: Chmilewsky-Lehner, Robert

(56) Entgegenhaltungen:
- EP-B1- 0 302 740
- GB-A- 2 435 108
- JP-A- 2001 339 627
- JP-A- 2006 145 571
- US-A- 5 623 367
- US-A1- 2008 094 708
- US-B1- 6 179 427

## Beschreibung

Die Erfindung betrifft eine Schutzkappe für ein Gerät, insbesondere eine Objektiv- oder Okularseite eines optischen Geräts, wie ein Beobachtungsgerät, wie diese im Anspruch 1 beschrieben wird.

Aus der DE 939 192 C ist ein Schutzdeckel aus durchsichtigem Material für Objektive oder Okulare von optischen Geräten, insbesondere für Fotoobjektive bekannt geworden. Hier wird ein Teil des Schutzdeckels aus einem durchsichtigen Material so ausgeführt, dass er Lupenwirkung besitzt. Auf diese Weise hat man jederzeit eine Lupe zur vergrößernden Betrachtung bereit die es gestattet, die einzustellenden Werte am Objektiv oder Okular leichter erkennen zu können. Ein als Lupe verwendbarer Schutzdeckel bedeutet besonders für Sehbehinderte einen großen Vorteil, da die an der Objektfassung, dem Verschluss und dem Blendenring angebrachten Zahlen meist sehr klein und ohne Sehhilfen nur schwer erkennbar sind. Der gesamte Schutzdeckel besteht aus einem Werkstoff, wobei an jenem Bereich an dem der Schutzdeckel auf das Objektiv aufgesetzt ist, zusätzlich noch mit einem Samtband versehen werden kann.

Aus der DE 1 761 392 U sind Schutzdeckel für Objektive von Feldstechern bekannt geworden, bei denen die Deckel einzeln an den unteren Ende des Tragriemens des Feldstechers befestigt sind. Dadurch sind die Deckel dann auch einzeln auf die Objektivtuben des Feldstechers steckbar und halten sich dabei durch Haftreibung auf den Tuben. Werden die Enden des Tragriemens üblicherweise durch am Feldstecher befestigte Ösen gezogen, dann zieht der Riemen die Deckel nach dem Abnehmen bis an die Ösen. Somit legen sie sich fest ans Feldstechergehäuse an und behindern den Feldstechergebrauch nicht mehr.

Aus dem Dokument US 2008/094708 A1 ist ein Schutzkappenset für eine Linsenanordnung eines Projektors bekannt. Die Schutzkappe besteht aus einem äußeren ringförmigen Gummiteil mit einem rohrförmigen bzw. zylindrischen Mantel und einer in diesen Gummiteil eingesetzten Scheibe aus einem Eisenmaterial. Die Scheibe dient dazu, Deformationen der Schutzkappe, die durch die Lichtstrahlung des Projektors hervorgerufen werden könnte, zu verhindern.

Das Dokument US 5,623,367 A beschreibt eine Augenmuschel mit einer automatischen Blende zum Aufsetzen auf ein Okular eines optischen Instrumentes. Die Blende weist eine Mehrzahl von Segmenten auf, die elastisch verschwenkbar sind, sodass die Blenden federelastisch rückstellbar geöffnet und verschlossen werden können.

Die Dokumente EP 0302740B1 und US6179427B1 zeigen weitere Objektiv-Kappen.

Der vorliegenden Erfindung liegt die Aufgabe zugrunde, eine Schutzkappe für eine Objektiv- oder Okularseite eines optischen Geräts, insbesondere eines Beobachtungsgeräts zu schaffen, bei welcher die Handhabung beim Aufsetzen der Schutzkappe auf das optische Gerät erleichtert und damit verbessert wird.

Diese Aufgabe der Erfindung wird durch die Merkmale des Anspruches 1 gelöst.
Der sich durch die Merkmale des Anspruchs 1 ergebende Vorteil liegt darin, dass die Stirnwand und der Kappenmantel der Schutzkappe aus zueinander unterschiedlich biegesteifen bzw. biegefesten oder eine unterschiedliche Härte aufweisenden Werkstoffen gebildet sind und so die jeweiligen Eigenschaften der einzelnen Bauteile auf den ganz bestimmten Einsatzzweck abgestimmt werden können. Dadurch kann speziell im äußeren Randbereich der Schutzkappe eine ausreichende Schutz- und Dämmwirkung für das optische Gerät erzielt werden und trotzdem eine Versteifung bzw. Verstärkung der Stirnwand für den Aufsetz- bzw. Aufschnappvorgang der gesamten Schutzkappe erzielt werden. Dadurch kann die gesamte Schutzkappe zuerst vorzentriert auf das Okular und/oder Objektiv des optischen Geräts aufgesetzt werden und mit einer nachfolgenden weiteren einfachen zentralen Druckaufbringung lediglich auf die Stirnwand, insbesondere deren Zentrum, die gesamte Schutzkappe durch diese Druckkraft im Bereich der Stirnwand vollständig auf das zu schützende Objektiv bzw. Okular aufgesetzt bzw. aufgeschoben werden. Bei ansonst üblichen sehr weich und elastisch ausgebildeten Schutzkappen ist diese zentrale Aufsetzbewegung nicht möglich. So war eine verteilt über den äußeren Umfangsrand der Schutzkappe aufzubringende Druckbeaufschlagung notwendig, um diese ordnungsgemäß aufsetzen bzw. aufschnappen zu können. Durch den steifer bzw. biegefester ausgebildeten Werkstoff der Stirnwand kann nun die Aufsetzbewegung mit einer Einfingerbedienung durchgeführt werden.

Vorteilhaft ist auch eine weitere Ausführungsform nach Anspruch 2, da hierbei zumindest die Stirnwand der Schutzkappe in Art eines Sandwichbauteils aus Werkstoffen mit zueinander unterschiedlichen Elastizitätsmodulen eingesetzt werden, wodurch einerseits die Steifigkeit der Schutzkappe im Bereich der Stirnwand vorherbestimmbar ausgelegt werden kann und andererseits trotzdem eine ausreichende Schutz- und Dämmwirkung der gesamten Schutzkappe für das optische Gerät geschaffen werden kann. Durch die mehrlagige Ausbildung wird jener Werkstoff der zum Aufschnappen auf das optische Gerät Anwendung findet und dabei den geringeren Elastizitätsmodul bezüglich der weiteren Lage aufweist soweit verstärkt, dass die gesamte Schutzkappe zuerst vorzentriert auf das Okular und/oder Objektiv aufgesetzt werden kann und mit einer nachfolgenden weiteren einfachen zentralen Druckaufbringung die gesamte Schutzkappe durch diese Druckkraft im Bereich der Stirnwand vollständig aufgesetzt bzw. aufgeschoben werden kann.

Vorteilhaft ist auch dass eine weitere der Lagen der Stirnwand durch den gleichen Werkstoff wie der Kappenmantel gebildet ist, da so ein in einem Herstellungsvorgang herzustellender Bauteil geschaffen werden kann, in welchem der Einlageteil bzw. die erste Lage eingebettet bzw. daran angeformt werden kann. Darüber hinaus kann aber die Schutzkappe auch noch auf unterschiedliche Einsatzbedingungen einfach abgestimmt werden.

Durch die Ausbildung nach Anspruch 3 kann zusätzlich zur inneren Zentrierung des Kappenmantels über den Umfang der Okular- oder Objektivseite auch an deren Außenseite eine zusätzliche Halterung der gesamten Schutzkappe erzielt werden. Dadurch ist es möglich, das Ende des zu schützenden Optische Gerät vollumfänglich abzudecken und so optimal schützen zu können.

Nach einer anderen Ausführungsvariante gemäß Anspruch 4 oder 5 wird so ein noch besserer Halt der Schutzkappe in der montierten Schutzstellung am optischen Gerät erzielt. Zusätzlich kann aber auch noch die Abdichtung der Optik des optischen Geräts verbessert werden und so das Eindringen von Staub und Schmutz während der Lagerung bzw. dem Transport hin zu den optischen Bauteilen verhindert werden.

Vorteilhaft ist auch eine Weiterbildung nach Anspruch 6, da so der Aufsetz- sowie Abnahmevorgang der Schutzkappe vom optischen Gerät zusätzlich erleichtert werden kann und an vorbestimmten Stellen das Zu- bzw. Abströmen von Luft ermöglicht wird. Dadurch kann beim Aufsetzen die ansonst zwischen der Schutzkappe, dem Tubus und der Linse eingeschlossene Luftmenge soweit entweichen, dass kein Luftpolster entsteht und die Schutzkappe von diesem herunter gedrückt wird.

Bei der Ausgestaltung nach Anspruch 7 ist von Vorteil, dass so auch der Abnahmevorgang der Schutzkappe zusätzlich erleichtert werden kann, da bei fest und dicht anliegendem Schenkel des Halteansatzes so von außen hin zum Kappenmantel bereits Luft zuströmen kann. Auch der Aufsetzvorgang wird dabei noch erleichtert, da aus dem Aufnahmeraum für das Okular auch die dort enthaltene Luftmenge sicher entweichen kann. Dadurch wird der Halt der Schutzkappe am optischen Gerät zusätzlich noch verbessert.

Vorteilhaft ist auch eine weitere Ausführungsform nach Anspruch 8, da so durch den höher gewählten Elastizitätsmodul das Ausmaß der Versteifung bzw. Verstärkung der gesamten Stirnwand festgelegt werden kann, wodurch das Ausmaß der Durchbiegung während der Aufsetzbewegung gegenüber herkömmlichen Schutzkappen wesentlich minimiert werden kann.

Durch die Ausbildung nach Anspruch 9 ist es möglich, die Steifigkeit bzw. Durchbiegung der Stirnwand einfach an unterschiedlichste Einsatzbedingungen anpassen zu können.

Nach einer anderen Ausführungsvariante gemäß Anspruch 10 wird eine getrennte Herstellmöglichkeit der Lagen geschaffen. So kann die erste Lage bzw. der Einlageteil zuerst in einem eigenen Herstellvorgang ausgebildet werden und in einem weiteren Formvorgang beim Herstellen der weiteren Lage bzw. des Kappenmantels mit diesem Werkstoff verbunden, wie angeformt bzw. in diesen eingebettet werden.

Vorteilhaft ist auch eine Weiterbildung nach Anspruch 11, da so bei entsprechender gegenseitiger Werkstoffwahl eine einwandfreie Haftverbindung zwischen den zu verbindenden Bauteilen geschaffen werden kann.

Bei der Ausgestaltung nach Anspruch 12 ist von Vorteil, dass so nicht nur die Stirnwand versteift wird sondern auch eine zusätzliche Versteifung des Kappenmantels erzielt werden kann.

Durch die Weiterbildung nach Anspruch 13 wird erreicht, dass so einerseits für den vorgespannten Haltezustand am zu schützenden optischen Gerät ein minimaler Verformungsweg der Stirnwand in radialer Richtung geschaffen wird und zusätzlich während der Aufsetzbewegung keine zu hohen Verformungen der gesamten Stirnwand notwendig sind. Dadurch wird die Aufsetzkraft minimiert und darüber hinaus auch noch die Haltekraft im montierten Zustand erhöht.

Es ist aber auch eine Ausbildung, wie im Anspruch 14 beschrieben möglich, da so mit einer geringeren Wandstärke für den Einlageteil das Auslangen gefunden werden kann und trotzdem eine biegefeste bzw. biegesteife Ausbildung der Stirnwand erreicht wird.

Vorteilhaft ist auch eine Ausbildung nach Anspruch 15, da so im Zusammenwirken mit dem Ansatz im Kappenmantel eine raschere Kraftübertragung während der Aufschubbewegung der Schutzkappe erzielt werden kann und darüber hinaus die Verformungswege der Stirnwand gering gehalten werden können.

Gemäß einer Ausbildung wie im Anspruch 16 beschrieben, wird mit Vorteil eine zusätzliche mechanische Verbindung zwischen den beiden übereinander angeordneten Lagen erreicht.

Dabei erweist sich eine Ausgestaltung nach Anspruch 17 vorteilhaft, weil so für den Aufdrückvorgang das steifere und festere Material bereits an der Außenseite der Schutzkappe angeordnet ist und deshalb diese im Bereich der Stirnwand vor hohem mechanischem Abrieb geschützt werden kann. Darüber hinaus wird dem Benutzer auf einfache Art und Weise signalisiert, dass die Schutzkappe im Bereich ihres Zentrums mit einer entsprechenden Druckkraft zu beaufschlagen ist, um diese auf das zu schützende optische Gerät aufzusetzen.

Nach einer vorteilhaften Weiterbildung gemäß Anspruch 18 wird eine zusätzliche mechanische formschlüssige Verbindung zwischen den miteinander zu verbindenden Schichten geschaffen.

Von Vorteil ist aber auch eine Ausbildung nach Anspruch 19, da so nicht nur im Randbereich sondern auch im Bereich des Zentrums mit der größten relativen gegenseitigen Verlagerung zwischen den Lagen bzw. Schichten eine zusätzliche mechanische Stütze geschaffen und so die gesamte Festigkeit erhöht werden kann.

Gemäß Anspruch 20 wird eine zusätzliche Versteifung der Schutzkappe auch über den Bereich der Stirnwand hinaus erzielt und so die Aufsetzbewegung der Schutzkappe auf das zu schützende Optische Gerät noch zusätzlich vereinfacht.

Bei der Ausbildung gemäß Anspruch 21 wird ein vordefinierter Schwächungsbereich für den an der Okular- oder Objektivseite außen übergreifenden Halteansatz geschaffen, wodurch der Aufschnappvorgang wesentlich erleichtert werden kann.

Es ist aber auch eine Ausbildung, wie im Anspruch 22 beschrieben möglich, da so ein in einem Herstellungsvorgang herzustellender Teil geschaffen werden kann, in welchem der Einlageteil bzw. die erste Schicht eingebettet bzw. daran angeformt werden kann. Darüber hinaus kann aber die Schutzkappe auch noch auf unterschiedliche Einsatzbedingungen einfach abgestimmt werden.

Schließlich ist weiters eine Ausbildung nach Anspruch 23 vorteilhaft, da so auch im Randbereich der Schutzkappe eine ausreichende Dämpfungswirkung für das zu schützende optische Gerät erzielt werden kann. Darüber hinaus kann durch die höhere elastische Verformbarkeit auch ein ausreichender Reibschluss für die Halterung der Schutzkappe am zu schützenden optischen Gerät erzielt werden.

Zum besseren Verständnis der Erfindung wird diese anhand der nachfolgenden Figuren näher erläutert.

Es zeigen:
- Fig. 1: eine erste erfindungsgemäße Ausbildung einer Schutzkappe in schaubildlich ver- einfachter Darstellung;
- Fig. 2: die Schutzkappe nach Fig. 1 in Ansicht von unten;
- Fig. 3: die Schutzkappe nach den Fig. 1 und 2, in Ansicht geschnitten, gemäß den Linien III - III in Fig. 2;
- Fig. 4: einen Teilabschnitt des äußeren Randbereichs der Schutzkappe nach den Fig. 1 bis 3, in Ansicht geschnitten und vergrößerter Darstellung;
- Fig. 5: einen Teilabschnitt einer weiteren mögliche Ausbildung der Schutzkappe, in An- sicht geschnitten und vergrößerter Darstellung;
- Fig. 6: eine andere, nicht unter die Erfindung fallende Weiterbildung der Schutzkappe, in Ansicht geschnitten sowie verein- fachter schematischer Darstellung;
- Fig. 7: eine weitere Ausbildung der Schutzkappe, in Ansicht von unten sowie vereinfach- ter schematischer Darstellung;
- Fig. 8: eine zusätzliche Weiterbildung einer, nicht unter die Erfindung fallenden Schutzkappe, in Ansicht geschnitten gemäß den Linien VIII - VIII in Fig. 9 sowie vereinfachter schematischer Darstellung;
- Fig. 9: die Schutzkappe nach Fig. 8, in Ansicht von unten gemäß Pfeil IX in Fig. 8;
- Fig. 10: eine weitere Ausbildung der Schutzkappe, in Ansicht geschnitten sowie verein- fachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

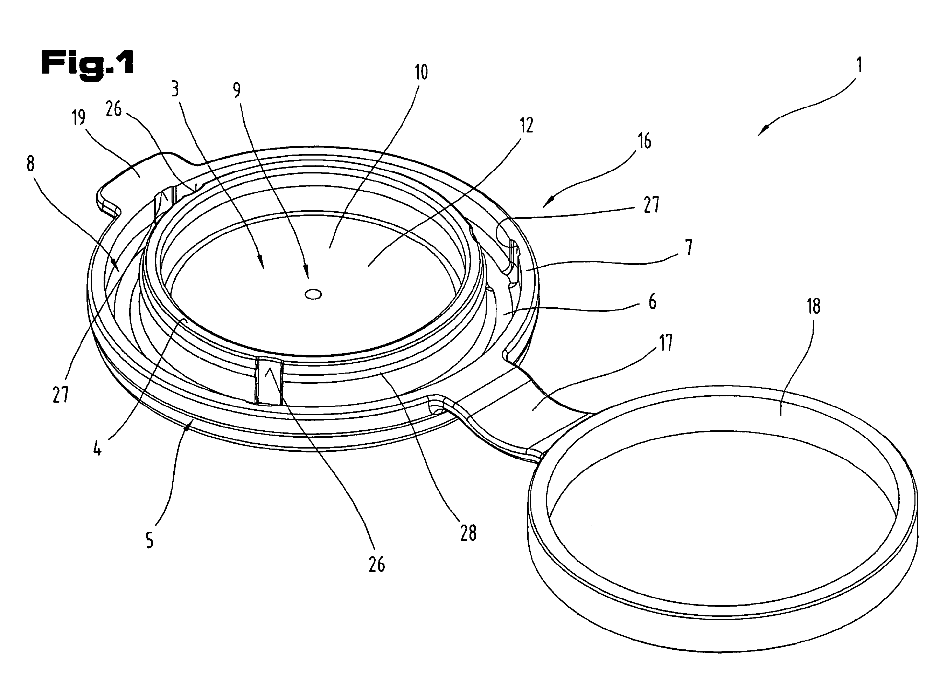

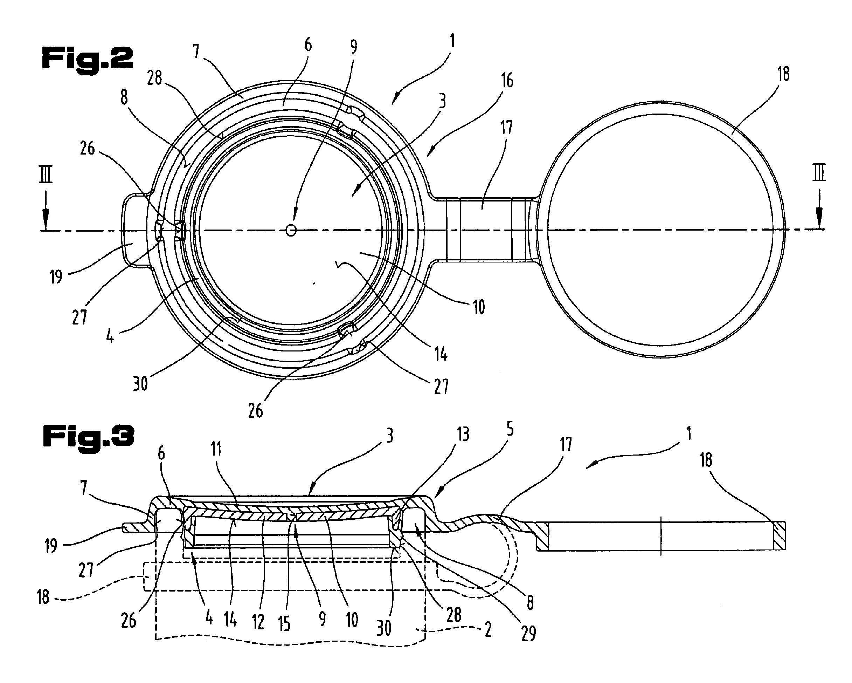

In den Fig. 1 bis 4 ist eine erste mögliche und gegebenenfalls für sich eigenständige Ausbildung einer Schutzkappe 1 für ein optisches Gerät 2, wie ein Beobachtungsgerät, gezeigt, wobei davon nur ein Teilabschnitt des optischen Geräts 2 vereinfacht in strichlierten Linien in der Fig. 3 dargestellt ist.

Das optische Gerät 2 weist eine hier nicht näher dargestellte Objektiv - und/oder Okularseite auf, wobei die Schutzkappe 1 zum Abdecken sowohl der Objektiv- als auch der Okularseite dienen kann. Die Größe der Schutzkappe 1 ist dabei an die gegebenen Abmessungen des optischen Geräts 2 abzustimmen. Das optische Gerät 2 kann sowohl ein monokulares als auch ein binokulares Fernrohr bzw. Fernglas sein. Es könnte sich dabei aber auch um ein Objektiv eines Fotoapparates oder ähnliches handeln, welches durch die Schutzkappe 1 abzudecken ist.

Die Schutzkappe 1 weist eine Stirnwand 3 auf, welche die Objektiv- oder Okularseite des abzudeckenden optischen Geräts 2 nach außen hin abschließt. Am äußeren Umfang der Stirnwand 3 ist ein Kappenmantel 4 angeordnet bzw. ausgebildet. Bei diesem hier gezeigten Ausführungsbeispiel ist der Kappenmantel 4 zum Einsetzen innerhalb des Tubus der Objektiv- und/oder Okularseite vorgesehen. Zur besseren Halterung am optischen Gerät 2 bzw. zur Abdeckung des optischen Geräts 2 ist es vorteilhaft, wenn anschließend an den Kappenmantel 4 ein im Axialschnitt gesehen L-förmiger Halteansatz 5 angeordnet bzw. ausgebildet ist. Der L-förmig ausgebildete Halteansatz 5 weist seinerseits Schenkel 6, 7 auf. Der erste Schenkel 6 steht mit der Stirnwand 3 bzw. mit dem Kappenmantel 4 in Verbindung und überragt diese bzw. diesen radial nach außen. Weiters ist der Schenkel 6 bevorzugt winkelig zum Kappenmantel 4 angeordnet, wobei auch hier noch von einer in etwa flächigen bzw. parallelen Anordnung bezüglich der Stirnwand 3 gesprochen werden kann. Der weitere Schenkel 7 ist in etwa parallel verlaufend zum Kappenmantel 4, jedoch dazu radial distanziert nach außen von diesem angeordnet. Da sowohl der Kappenmantel 4 als auch der weitere Schenkel 7 in etwa rohrförmig ausgebildet sind, kann auch von einer in etwa zylindrischen Raumform gesprochen werden, wobei sich zwischen den beiden Endbereichen des Kappenmantels 4 bzw. des Schenkels 7 eine Längsachse erstreckt.

Die beiden Schenkel 6, 7 des Halteansatzes 5 begrenzen im Zusammenwirken mit dem Kappenmantel 4 einen bevorzugt umlaufenden rohr- bzw. zylinderförmigen Aufnahmeraum 8. Dieser Aufnahmeraum 8 dient dazu, den entsprechend gegengleichen ausgebildeten Teil des optischen Geräts 2 darin aufzunehmen, um an diesem lösbar gehaltert zu werden. Durch die Wahl des Werkstoffes des Kappenmantels 4 sowie der Schenkel 6, 7 des Halteansatzes 5 kann aufgrund der elastischen Verformung dieser Bauteile eine ausreichende Haft- bzw. Haltewirkung während der schützenden bzw. abdeckenden Stellung der Schutzkappe 1 am optischen Gerät 2 erzielt werden.

Da bekannte optische Geräte 2 zumeist im Bereich ihrer Objektiv- bzw. Okularseite einen runden Querschnitt aufweisen, wird dazu auch die Schutzkappe 1, insbesondere der Kappenmantel 4, daran angepasst und ist ebenfalls scheibenförmig bzw. kreisrund und im Falle des Kappenmantels 4 auch rohrförmig ausgebildet. So weist die Stirnwand 3 ein Zentrum 9 auf von welchem radial distanziert der Kappenmantel 4 angeordnet bzw. ausgebildet ist.

Die Stirnwand 3 ist bei diesem Ausführungsbeispiel ausgehend von ihrem Zentrum 9 hin zum Kappenmantel 4 bevorzugt mehrlagig ausgebildet, wobei der Werkstoff einer ersten Lage 10 bezüglich dem Werkstoff einer weiteren bzw. zweiten Lage 11 einen dazu höheren Elastizitätsmodul und/oder eine dazu höhere Shore-Härte A aufweist. Dabei kann aber die erste Lage 10 auch nur bereichsweise bzw. abschnittsweise die Stirnwand 3 bilden.

Zumeist werden derartige Schutzdeckel aus einem gummi- bzw. silikonartigen Material mit hohem Dämpfungsvermögen eingesetzt, um einerseits einwirkende Stöße auf das optische Gerät 2 ausreichend abfedern zu können und andererseits durch die leichte elastische Verformbarkeit ausreichend fest während der schützenden Funktion am optischen Gerät 2 zumeist über Reibschluss zu sitzen.

So ist es vorteilhaft, wenn der Elastizitätsmodul der ersten Lage 10 mit einer unteren Grenze von 2000 MPa, insbesondere 5000 MPa, und einer oberen Grenze von 210000 MPa, insbesondere 15000 MPa, gewählt wird. Ein bevorzugter Wert kann dabei zwischen 6000 MPa und 8000 MPA, wie z.B. bei 7000 MPa liegen. Als Prüfmethode wird dabei die Norm gemäß ISO 527-1/-2 angewendet, wobei die Prüftemperatur bei 23° C liegt.

Der Elastizitätsmodul der zweiten Lage 11 wird bezüglich dem Elastizitätsmodul der ersten Lage 10 geringer gewählt. Die Shore-Härte A der zweiten Lage 11 kann mit einer unteren Grenze von 50 und einer oberen Grenze von 80 gewählt werden.

Die bezüglich der zweiten Lage 11 härtere bzw. festere und somit steifere erste Lage 10 kann dabei aus einem Werkstoff aus der Gruppe von Kunststoff, Metall, Metalllegierungen, Holz oder einem holzähnlichen Werkstoff, Glas, Keramik, Verbundbauteile gewählt werden. Als Kunststoff kann beispielsweise der Werkstoff PBT-GF20 (Polybutylenterephthalat), welcher von der Fa. BASF unter dem Handelsnamen "Ultradur ® - B 4300 G4 High Speed" vertrieben wird, Anwendung finden. Aus diesem Werkstoff, welchem auch noch Glasfasern bis zu 20% zugesetzt sind, lassen sich steife, zähe und dimensionsstabile Teile fertigen. Es können in die zuvor genannten Werkstoffe, wenn diese es zulassen, die unterschiedlichsten Fasern bzw. Fäden mit eingebettet werden.

Wird Glas oder ein entsprechend durchsichtiger Kunststoff verwendet, kann die erste Lage 10 auch als Filterelement z.B. für die Sonnenbeobachtung oder als selektiver Laserschutzfilter dienen, wo in das Transmissionsverhalten eingegriffen werden muss. Dann kann eine Doppelfunktion für die Schutzkappe 1 erzielt werden, wobei dann eine Abnahme bei einem bestimmten Verwendungszweck des Geräts 2, insbesondere des Beobachtungsgeräts, nicht notwendig ist. Bei entsprechender Einfärbung des Werkstoffes der Lage 10 können die unterschiedlichsten Verwendungszwecke erreichen.

Bei der Wahl des Werkstoffes der Lage 10 ist aber auch auf eine Verträglichkeit mit dem gewählten Werkstoff des zu schützenden Geräts 2 Bedacht zu nehmen, um beispielsweise Korrosion usw. zwischen den miteinander in Kontakt stehenden Bauteilen zu vermeiden.

Die mehrlagige Ausbildung zumindest der Stirnwand 3 weist jenen Vorteil auf, dass so mehrere unterschiedliche Materialien kombiniert miteinander einsetzbar sind, um so die Festigkeitseigenschaften der gesamten Schutzkappe 1 ausgehend von ihrem Zentrum 9 hin zum Kappenmantel 4 besser und einfacher auf unterschiedlichste Einsatzbedingungen abstimmen zu können. So ist es beispielsweise möglich, die erste Lage 10 als eigenen flächigen Einlageteil 12 auszubilden, wobei dieser zumindest bereichsweise von der zweiten Lage 11 umgeben, insbesondere in die zweite Lage 11 bereichsweise eingebettet ist.

Der Einlageteil 12 kann dabei beispielsweise als eigenständiger Bauteil in einem separaten Spritzgussvorgang hergestellt werden und anschließend während der Herstellung der gesamten Schutzkappe 1 mit dem weiteren Werkstoff der zweiten bzw. weiteren Lage 11 verbunden, wie angeformt werden. Dabei spricht man auch von einem Anspritzen des Werkstoffes der zweiten Lage 11 bzw. des Kappenmantels 4 an den Werkstoff der ersten Lage 10 bzw. des Einlageteils 12. Unabhängig davon wäre es aber auch möglich, die zweite Lage 11 bzw. den daraus gebildeten Einlageteil 12 während deren bzw. dessen Herstellung an den Werkstoff der ersten Lage 10 anzuformen. Bei entsprechender Wahl der Werkstoffe der ersten und zweiten Lage 10, 11 kann eine formschlüssig haftende Verbindung im Bereich der gegenseitigen Anlageflächen erzielt werden. Unabhängig davon wäre es aber auch möglich, den Werkstoff zur Bildung der ersten Lage 10 und den Werkstoff zur Bildung der zweiten bzw. weiteren Lage 11 in einem so genannten Zweikomponenten-Spritzguss in die nicht näher dargestellte Spritzgussform nacheinander und/oder miteinander einzubringen und so den Einlageteil 12 bzw. die erste Lage 10 und anschließend die weiter Lage 11 auszubilden. Eine Umkehr der Herstellungsreihenfolge wäre dabei aber auch möglich.

Der Einlageteil 12 bzw. die Lage 10 könnte aber auch aus Geflechten, Gewirken, Gestricken, Vliesen sowie Vliesstoffen aus den unterschiedlichsten Werkstoffen bzw. Werkstoffkombinationen gebildet sein. Bei entsprechender Wahl wird auch eine ausreichende Versteifung, insbesondere in der Biegesteifigkeit, der Stirnwand 3 erzielt, wobei dann auch der gesamte Einlageteil 12 in die zweite Lage 11 eingebettet werden kann. Durch die einzelnen Fäden bzw. Gitterstäbe kann dann der Werkstoff zur Bildung der zweiten Lage 11 hindurch treten und so eine formschlüssige Anbindung zwischen den beiden Lagen 10, 11 erfolgen.

Die erste Lage 10 bzw. der daraus gebildete Einlageteil 12 erstreckt sich ausgehend vom Zentrum 9 hin in Richtung auf den Kappenmantel 4. Bei kreisrunder Ausbildung der Objektiv- bzw. Okularseite des optischen Geräts 2 kann dies auch nur ein Teilbereich in radialer Richtung gesehen sein, z.B. 1/3 bis 2/3 der Distanz zwischen Zentrum 9 und Kappenmantel 4, oder aber durchgehend bis hin zum Kappenmantel 4 sowie gegebenenfalls aber auch darüber hinaus.

Weiters ist es vorteilhaft, wenn der Einlageteil 12 weiters einen rohrförmig ausgebildeten Ansatz 13 umfasst bzw. aufweist und der Ansatz 13 im Kappenmantel 4 eingebettet bzw. darin aufgenommen ist. Dieser Ansatz 13 ist am zumeist scheibenförmig ausgebildeten Einlageteil 12 im Bereich seines äußeren Umfanges angeordnet, wobei der gesamte so ausgebildete Einlageteil 12 ebenfalls eine in etwa kappenförmige Form aufweist. Der Ansatz 13 kann aber auch nur abschnittsweise im Umfangs- bzw. Randbereich des Einlageteils 12 angeordnet bzw. ausgebildet sein.

Wie weiters am besten aus der Fig. 3 zu ersehen ist, ist der Einlageteil 12 im Axialschnitt gesehen, ausgehend von seinem äußeren Umfang hin zu seinem Zentrum 9 auf die dem abzudeckenden optischen Gerät 2 zugewendete Seite - also jener Seite, die dem Kappenmantel 4 zugewendet ist - bombiert ausgebildet. Durch die bevorzugt kreisrunde Ausbildung des Einlageteils 12 kann dann auch von einer schüsselartigen oder kugelkalottenförmigen Formgebung gesprochen werden. Im Axialschnitt gesehen weist somit der Einlageteil 12 eine bogenförmige Krümmung auf, wobei die Wölbung hin auf die Seite des Kappenmantels 4 gerichtet ist. Auf der der zweiten Lage 10 zugewendeten Seite weist der Einlageteil 12 im Axialschnitt eine konvexe Krümmung auf.

Weiters ist aus der Fig. 3 noch zu ersehen, dass der Einlageteil 12 im Bereich der Stirnwand 3 an der dem abzudeckenden optischen Gerät 2 zugewendeten Seite der Schutzkappe 1 angeordnet ist. Der hier scheibenförmige Einlageteil 12 bildet somit im Bereich der Stirnwand 3 eine Innenfläche 14 der Schutzkappe 1 aus, welche sich durchlaufend bis hin zum bevorzugt rundum durchlaufenden Kappenmantel 4 erstreckt.

Zur besseren Halterung bzw. Anformung der weiteren bzw. zweiten Lage 11 an die erste Lage 10 bzw. den Einlageteil 12 kann zumindest im Zentrum 9 des Einlageteils 12 eine Durchsetzung 15 vorgesehen sein, in welche der Werkstoff bzw. das Material der zweiten Lage 11 hineinragt. Je nach Formgebung der Durchsetzung 15 kann so auch in diesem Bereich eine zusätzliche formschlüssige Halterung zwischen den beiden Lagen 10, 11 im Bereich der Stirnwand 3 erzielt werden. Dies ist dann von Vorteil, wenn der Werkstoff der ersten Lage 10 keine dauerhaft anhaftende Verbindung, wie beispielsweise eine Verschmelzung oder Verschweißung, mit der zweiten Lage 11 zulässt.

Die erste Lage 10 der Stirnwand 3 wird hier überwiegend durch den Einlageteil 12 gebildet, welcher aus den zuvor angegebenen Werkstoffen bzw. einer beliebigen Kombination daraus gewählt werden kann. Die zweite Lage 11 der Stirnwand 3, der Kappenmantel 4 sowie gegebenenfalls der Halteansatz 5 aus den beiden Schenkeln 6, 7 bilden bevorzugt einen einzigen zusammengehörigen Bauteil aus, welcher auch als Grundkörper 16 bezeichnet werden kann. Der Werkstoff zur Bildung der vorgenannten einzelnen Teile des Grundkörpers 16 kann dabei aus der Gruppe von elastomeren Werkstoffen wie Silikone (synthetische Polymere) insbesondere z.B. Silikon 70 Shore A oder Silikonkautschuke oder Silikongummi, Gummi wie Naturkautschuk oder synthetischer Kautschuk insbesondere Nitrilkautschuk (NBR) oder Styrol-Butadien Kautschuk (SBR), thermoplastische Elastomere (TPE) gewählt sein. Diese vorgenannten Werkstoffe zur Bildung des Grundkörpers 16 sollen somit flexibel und elastisch verformbar sowie gegebenenfalls auch noch selbsttätig elastisch rückstellbar sein. Dabei haben sich auch Kunststoffe mit derartigen Eigenschaften als besonders günstig erwiesen.

Um die Schutzkappe 1 nach der Abnahme von der schützenden Stellung des optischen Geräts 2 weiters an diesem zu halten und nicht lose Teile in der Hand zu haben, ist es vorteilhaft, wenn an der Schutzkappe 1 über ein elastisch ausgebildetes Verbindungselement 17 ein zusätzliches Befestigungselement 18 bevorzugt einstückig damit verbunden ist. Wird der zuvor beschriebene Grundkörper 16 gemeinsam mit dem Verbindungselement 17 und dem Befestigungselement 18 in einem einzigen Herstellungsvorgang gefertigt, kann hier auch der gleiche Werkstoff gewählt werden.

Das Befestigungselement 18 ist dabei als ring- bzw. rohrförmiger Bauteil ausgebildet, welcher aufgrund der zumeist rund ausgebildeten Tuben ebenfalls eine daran angepasste Umrissform aufweist. Bei davon abweichenden Ausformungen der Tuben kann vorteilhafter Weise auch die Querschnittsform des Befestigungselements 18 daran angepasst werden, um eine entsprechende Orientierung am optischen Gerät 2 sicherzustellen. Bevorzugt wird aber eine runde Ausbildung gewählt, da bei ausreichender Elastizität sich das Befestigungselement 18 so auch an die Querschnittsform der Tuben anpassen kann. Die am optischen Gerät 2 montierte Stellung des Befestigungselements 18 ist in der Fig. 3 in strichlierten Linien vereinfacht dargestellt.

Zur leichteren Handhabung der aufsteckbaren und abnehmbaren Schutzkappe 1 kann diese an ihrem äußeren Umfang eine zusätzliche Handhabe 19 aufweisen. Die mehrlagige insbesondere zweilagige Ausbildung der Stirnwand 3 weist jenen Vorteil auf, dass der Grundkörper 16, insbesondere die zweite Lage 11, der Kappenmantel 4 sowie der Halteansatz 5, aus einem relativ weichen und elastischen Material gebildet werden können und somit eine gute Haftwirkung sowie Stoßdämpfung für den zu schützenden Teil des optischen Geräts 2 zu erzielen ist. Durch die zusätzliche erste Lage 10 bzw. dem daraus gebildeten Einlageteil 12 kann eine Versteifung der Stirnwand 3 dahin gehend erfolgen, dass beim Aufbringen der Schutzkappe 1 auf den Tubus die Stirnwand 3 bei einer darauf aufgebrachten Druckkraft nicht zu stark verformt wird und so mittels einer Einhand- bzw. Einfingerbedienung die Schutzkappe 1 am optischen Gerät 2 aufschnappt bzw. aufgebracht werden kann. Damit wird die Steifigkeit der Stirnwand 3 soweit erhöht, dass der Kappenmantel 4 auch innen liegend am zu schützenden Tubus in der schützenden Lage angeordnet sein kann. Durch die größere Längserstreckung bzw. Axialerstreckung des Kappenmantels 4 bezüglich des Schenkels 7 in der gleichen Richtung wird eine Vorzentrierung an der Innenseite des Tubus erreicht und erst nach einem gewissen Aufschiebeweg der ring- bzw. rohrförmige Tubus in den Aufnahmeraum 8 eingeschoben.

Weiters ist aus einer Zusammenschau der Fig. 1 und 2 noch zu ersehen, dass zur Erleichterung der Aufsetz- und/oder Abnahmebewegung der Schutzkappe 1 vom optischen Gerät 2 an der vom Zentrum 9 abgewendeten Seite des Kappenmantels 4 - also auf seiner Außenseite 28 - in diesem zumindest eine Ausnehmung 26 angeordnet ist, welche sich bevorzugt bis hin zum Schenkel 6 des Halteansatzes 5 erstreckt. Diese Ausnehmung 26 ist bevorzugt im Bereich der Handhabe 19 angeordnet und kann auch mehrfach verteilt über den Umfang gesehen vorgesehen sein. Dabei dient die Ausnehmung 26 zur Entlüftung und/oder Belüftung des vom Tubus und der Schutzkappe 1 abgegrenzten Hohlraumes. So kann beim Aufsetzen der Schutzkappe 1 die in diesem Hohlraum vorhanden Luftmenge zumindest zum größten Teil durch die Ausnehmung 26 entweichen. Ähnliches gilt auch beim Abnehmen der Schutzkappe 1, da so Luft über die Ausnehmung 26 in den Hohlraum hineinströmen kann, wodurch kein Unterdruck während der Abnahme aufgebaut wird und so kein zusätzlicher Saug- bzw. Hafteffekt auftritt.

Liegt der Halteansatz 5 mit seinem Schenkel 7 in der montierten Stellung der Schutzkappe 1 ebenfalls eng bzw. dichtend an der Außenseite des Tubus des optischen Geräts 2 an, kann auch an der dem Kappenmantel 4 bzw. dem Zentrum 9 zugewendeten Seite - als der Innenseite - des Schenkels 7 zumindest eine weitere Ausnehmung 27 angeordnet sein. Auch diese Ausnehmung 27 erstreckt sich in Axialrichtung ausgehend von einer Stimendfläche des Schenkels 7 bevorzugt durchlaufend bis hin zum ersten Schenkel 6 des Halteansatzes 5. Damit kann auch die im Aufnahmeraum 8 enthaltene Luftmenge zumindest zum größten Teil über die Ausnehmung 27 entweichen. Bevorzugt sind die beiden Ausnehmungen 26, 27 in radialer Richtung gesehen gegenüberliegend angeordnet. Die Ausnehmungen 26, 27 können aber auch als Rillen bzw. Kanäle bezeichnet werden.

Um einen vordefinierten Anlageabschnitt des Kappenmantels 4 am Tubus des optischen Geräts 2 festzulegen, kann am Kappenmantel 4 an der vom Zentrum 9 abgewendeten Seite - also an seiner Außenseite 28 - zumindest ein Vorsprung 29 ausgebildet sein. Der hier gezeigte Vorsprung 29 weist im Axialschnitt gesehen einen Querschnitt auf, welcher in etwa einem Kreisabschnitt entspricht und die Außenseite 28 des Kappenmantels 4 radial überragt. So kann der Vorsprung 29 nur abschnittsweise oder aber auch ringförmig sowie umfänglich durchlaufend ausgebildet sein. In Abhängigkeit von der gewählten Querschnittsform, der Anzahl sowie der Anordnung des oder der Vorsprünge 29 am Kappenmantel 4 kann die Zentrierwirkung und/oder die Rückhaltekraft für die Schutzkappe 1 in der montierten Stellung am optischen Gerät 2 festgelegt bzw. auch entsprechend variiert werden. Weiters ist es vorteilhaft, wenn der oder die Vorsprünge 29 distanziert von einer Stirnfläche 30 des Kappenmantels 4 hin in Richtung auf die Stirnwand 3 angeordnet sind, wobei die Stirnfläche 30 auf der von der Stirnwand 3 abgewendeten Seite des Kappenmantels 4 ausgebildet ist. So kann dann die Außenseite 28 bis hin zum Vorsprung 29 als zusätzliche Zentrierhilfe bzw. Einführhilfe der Schutzkappe 1 während dem Aufsetzvorgang auf den Tubus des optischen Geräts 2 dienen. Im Bereich der zuvor beschriebenen Ausnehmung 26 ist kann dann der durchlaufend ausgebildete Vorsprung 29 unterbrochen sein.

Durch die zusätzliche Versteifung der Stirnwand 3 durch den Einlageteil 12 kann die Bedienung im Bereich des Zentrums 9 erfolgen, wobei die Übertragung bzw. die Einleitung der Kraft hin zum Kappenmantel 4 erfolgt, ohne dass dabei die Stirnwand 3 bei einem relativ weich gewählten Werkstoff der Lage 11 bzw. des Grundkörpers 16 einer zu hohen Verformung unterliegt. Wäre nur ein einziger Werkstoff vorhanden, der zwar eine ausreichende Nachgiebigkeit bzw. Elastizität für den Halte- bzw. Haftvorgang aufweist, würde die Stirnwand 3 bei einer Krafteinleitung im Zentrum 9 eine hohe Verformung zulassen und so den Aufschnappvorgang wesentlich erschweren bzw. eine Einfingerbedienung überhaupt nicht zulassen. Dann müsste die gesamte Schutzkappe 1 an ihrem äußeren Umfang gehalten werden und dann auf das optische Gerät 2 aufgesetzt werden.

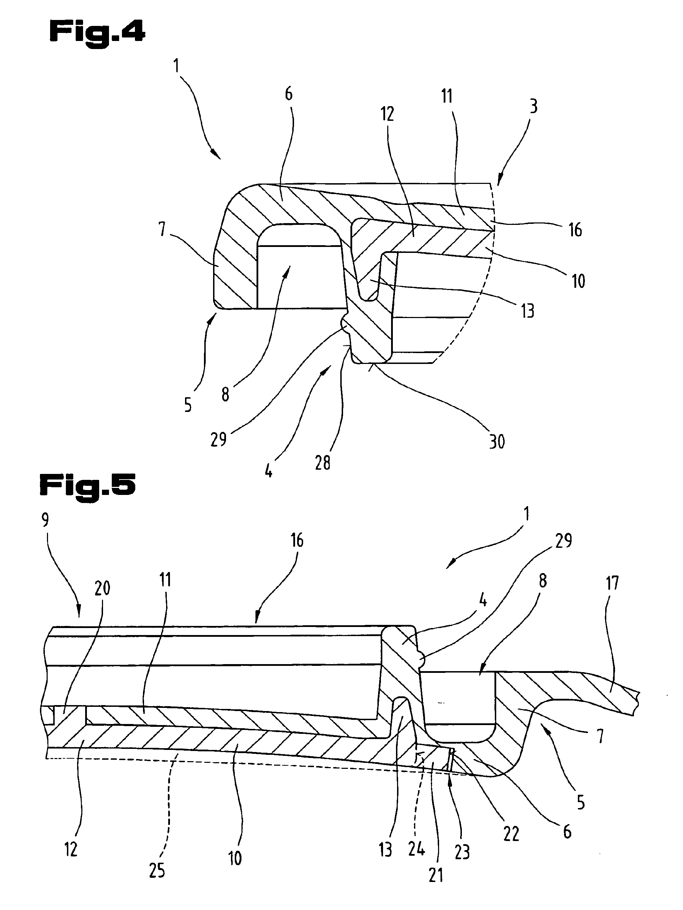

In der Fig. 5 ist eine weitere und gegebenenfalls für sich eigenständige Ausführungsform der Schutzkappe 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Auch diese Schutzkappe 1 ist im Bereich ihrer Stirnwand 3 mehrlagig ausgebildet und umfasst die erste Lage 10, die bevorzugt damit verbundene zweite Lage 11, den Kappenmantel 4 sowie gegebenenfalls den L-förmigen Halteansatz 5 mit seinen Schenkeln 6, 7.

Im Gegensatz zu der zuvor beschriebenen Ausführungsform der Schutzkappe 1 ist hier der durch die erste Lage 10 gebildete Einlageteil 12 im Bereich der Stirnwand 3 an der dem abzudeckenden optischen Gerät 2 abgewendeten Seite angeordnet. Damit bildet der Einlageteil 12 bzw. die erste Lage 10 bei montierter Stellung der Schutzkappe 1 am abzudeckenden bzw. zu schützenden optischen Gerät 2 zumindest einen Großteil der äußeren Oberfläche der Stirnwand 3 aus. Zur besseren Anhaftung bzw. Verbindung der ersten Lage 10 mit dem Material der zweiten Lage 11 ist es vorteilhaft, wenn am Einlageteil 12 zumindest ein Fortsatz 20 angeordnet ist, der in das Material bzw. den Werkstoff der zweiten Lage 11 hineinragt bzw. diese aber auch durchsetzt. Bevorzugt ist der Fortsatz 20 im Zentrum 9 des Einlageteils 12 angeordnet. Es wäre aber auch möglich, mehrere der Fortsätze 20 verteilt am Einlageteil 12 anzuordnen bzw. vorzusehen, und mittels dieser eine formschlüssige Anhaftung bzw. Verbindung mit dem Werkstoff der zweiten Lage 11 bzw. des Grundkörpers 16 zu erzielen.

Der Einlageteil 12 weist im Bereich seines äußeren Umfangs wiederum den in den Kappenmantel 4 hineinragenden und bevorzugt rohrförmig ausgebildeten Ansatz 13 auf. Dadurch wird auch der Kappenmantel 4 zusätzlich versteift, wodurch eine bessere Führungswirkung des Kappenmantels 4 während der Einsetzbewegung erzielbar ist.

Der bevorzugt flächig ausgebildete Einlageteil 12 kann weiters an seinem äußeren Umfangsbereich einen den rohrförmig ausgebildeten Ansatz 13 radial überragenden Flansch 21 aufweisen, welcher sich bevorzugt an der äußeren Oberfläche in den L-förmig ausgebildeten Halteansatz 5 hinein erstreckt. In diesem Bereich kann eine ebenflächige Ausbildung zwischen der äußeren Oberfläche des Einlageteils 12 und des L-förmigen Halteansatzes 5 vorgesehen werden.

Unabhängig davon wäre es aber auch möglich, eine vom Zentrum 9 des Einlageteils 12 abgewendete Stirnfläche 22 des Flansches 22 vom Material bzw. Werkstoff der zweiten Lage 11 hin in Richtung auf das Zentrum 9 übergreifen zu lassen und so eine vollständige Einbettung des Einlageteils 12 an seinem äußeren Umfangsbereich sicherzustellen.

Weiters kann aber auch der Werkstoff der zweiten Lage 11 im Bereich der vom Zentrum 9 abgewendeten Stirnfläche 22 des Flansches 21 radial dazu distanziert angeordnet sein. Damit wird ein minimaler Spalt 23 zwischen der Stirnfläche 22 und dem Werkstoff des Halteansatzes 5 des Grundkörpers 16 erzielt. Dadurch kann eine einfache und leichte Verformungsbewegung des Halteansatzes 5 zur Variation des Aufnahmeraums 8 für den Aufschnappvorgang erzielt werden.

Ist der Flansch 21 nicht vorgesehen, kann eine Stirnfläche 24 des Einlageteils 12 ebenfalls radial distanziert zum Werkstoff der zweiten Lage 11 angeordnet und somit wiederum der Spalt 23 ausgebildet sein. Auch wäre wiederum ein Übergreifen und so eine vollständige Einbettung des Einlageteils 12 an seinem äußeren Umfangsbereich möglich.

Unabhängig davon wäre es aber auch noch möglich, die Stirnwand 3 zumindest bereichsweise auch dreilagig auszubilden und dabei den gleichen Werkstoff wie zur Bildung des Grundkörpers 16 einzusetzen. Es wäre aber auch möglich einen dazu unterschiedlichen Werkstoff zu verwenden. Diese zusätzliche Lage 25 ist in strichlierten Linen in der Fig. 5 angedeutet. Damit wäre es möglich, die erste Lage 10 bzw. den Einlageteil 12 vollständig im Grundkörper 16 einzubetten. Dies Variante wäre aber auch bei der in den Fig. 1 bis 4 beschriebenen Ausführungsform denkbar.

Eine Spaltbereite des Spaltes 23 kann dabei von eng aneinander liegend, jedoch nicht angeformt, und somit mit einem Abstand von 0,0 mm bis hin zu einigen Zehntel mm oder größer gewählt werden.

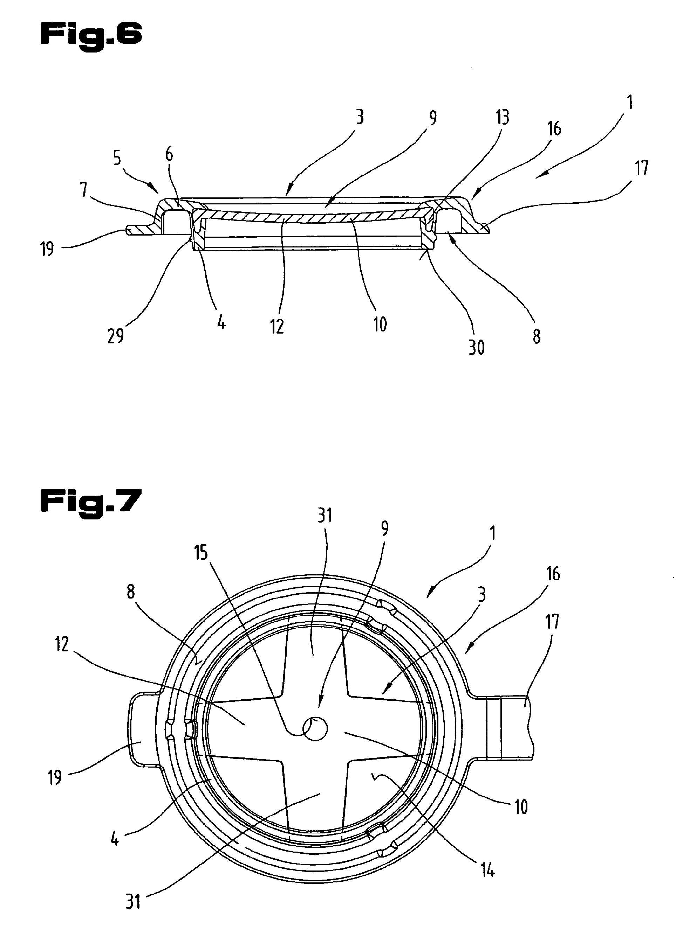

In der Fig. 6 ist eine, nicht unter die Erfindung fallende Schutzkappe 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Die hier gezeigte Schutzkappe 1 ist im Bereich ihrer Stirnwand 3 lediglich durch die erste Lage 10, im vorliegenden Ausführungsbeispiel durch den eigenen Einlageteil 12 gebildet. Dieser ragt in seinem äußeren Umfangsbereich in den Kappenmantel 4 hinein und ist von diesem bevorzugt umfänglich vollständig umgeben. Damit weist die Stirnwand 3 hier nur eine einlagige Ausbildung auf, wobei der Werkstoff zur Bildung der Lage 10 aus dem bezüglich des Kappenmantels 4 dazu festeren und steiferen Werkstoff gebildet ist.

Zur besseren Kraftübertragung ausgehend vom Einlageteil 12 hin auf den Kappenmantel 4 kann am Einlageteil 12 wiederum der zuvor beschriebene und bevorzugt ebenfalls umlaufend ausgebildete Ansatz 13 vorgesehen sein.

Der Kappenmantel 4 dient wiederum zum Einsetzen in die Innenseite eines hier nicht näher dargestellten Tubus des optischen Geräts 2. Zusätzlich zum Kappenmantel 4 kann auch hier wiederum der im Axialschnitt gesehen L-förmig Halteansatz 5 mit seinen Schenkeln 6, 7 vorgesehen sein. Zur einfacheren Handhabung der Schutzkappe 1 können sowohl die Handhabe 19 als auch die zuvor beschriebenen Ausnehmungen 26, 27 ausgebildet bzw. vorgesehen sein. Gleiches gilt auch für den zumeist über den Umfang durchlaufend ausgebildeten Vorsprung 28. Zur Halterung der Schutzkappe 1 am optischen Gerät 2 kann das hier nicht näher dargestellte Befestigungselement 18 über das Verbindungselement 17 mit der Schutzkappe 1, insbesondere dessen Grundkörper 16 in Verbindung stehen.

In der Fig. 7 ist eine weitere und gegebenenfalls für sich eigenständige Ausführungsform der Schutzkappe 1 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Auch diese hier gezeigte Schutzkappe 1 ist im Bereich ihrer Stirnwand 3 mehrlagig ausgebildet und umfasst die erste Lage 10, welche als eigener Einlageteil 12 ausgebildet ist. Im Gegensatz zu der in den Fig. 1 bis 3 gezeigten ersten Lage 10 ist diese im Grundriss betrachtet in etwa kreuz- bzw. sternförmig ausgebildet. Im Zentrum 9 des Einlageteils 12 kann wiederum die Durchsetzung 15 angeordnet sein, welche einen Durchtritt der zweiten Lage 11 ermöglicht.

Die Innenfläche 14 der Schutzkappe 1 wird hier abschnittsweise einerseits durch die erste Lage 10 bzw. den daraus gebildeten Einlageteil 12 sowie durch die zweite bzw. weitere Lage 11 gebildet. Umfänglich gesehen, können einzelne Arme 31 des Einlageteils 12 an deren äußeren Umfang wiederum die zuvor beschriebenen Ansätze 13 aufweisen, welche in den Kappenmantel 4 eingebettet bzw. darin aufgenommen sein können.

So ist die Stirnwand 3 abschnittsweise mehrlagig ausgebildet. Im Zentrum 9 weist der Einlageteil 12 die höchste Steifigkeit bzw. Festigkeit in Bezug auf deren Durchbiegung für den gewünschten Aufsetzvorgang auf das optische Gerät 2 auf. Dabei sei erwähnt, dass die gewählte Raumform des Einlageteils 12 in Stern- bzw. Kreuzform nur beispielhaft für einen Vielzahl von weiteren möglichen Raum- bzw. Querschnittsformen dargestellt worden ist.

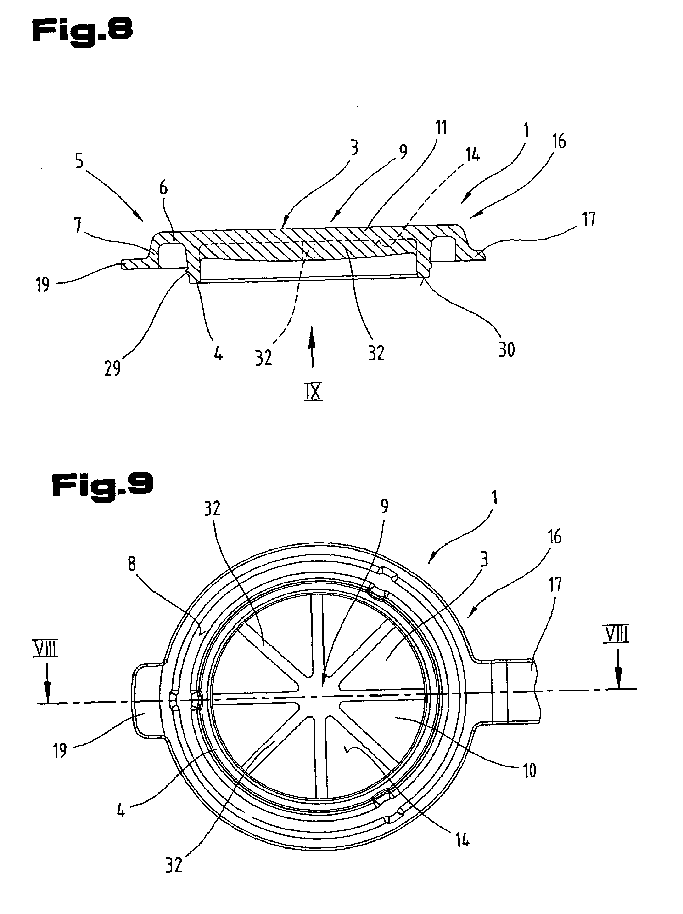

In der Fig. 8 und 9 ist eine weitere nicht unter die Erfindung fallende Schutzkappe 1 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Hier besteht die Schutzkappe 1 nur aus dem Grundkörper 16 und dieser alleinig aus dem Werkstoff der zweiten bzw. weiteren Lage 11, wobei auf die Anordnung der ersten Lage 10 bzw. des daraus gebildeten Einlageteils 12 verzichtet worden ist.

So wird die Schutzkappe 1 im Bereich von deren Stirnwand 3 durch den Werkstoff der zweiten Lage 11, umfänglich radial daran anschließend durch den Kappenmantel 4 sowie gegebenenfalls den L-förmigen Halteansatz 5 mit seinen Schenkeln 6, 7 gebildet. Gleichfalls können aber auch wiederum die Handhabe 19 sowie das über das Verbindungselement 17 mit der Schutzkappe 1 verbundene Befestigungselement 18 vorgesehen sein. Auf die Darstellung und Beschreibung der Ausnehmungen 26, 27 sowie des Vorsprungs 28 wird hier der besseren Übersichtlichkeit und Einfachheit der Zeichnung verzichtet. Diese zuvor beschriebenen Bauteile können selbstverständlich auch hier Anwendung finden.

Zur Versteifung der Stirnwand 3 gegen Durchbiegung bzw. Durchwölbung ist an dieser zumindest eine, bevorzugt jedoch mehrere stegartig ausgebildete Rippen 32 angeordnet bzw. vorgesehen. Dabei können sich die Rippen 32 radial gesehen zwischen dem umfänglich durchlaufenden Kappenmantel 4 erstrecken und so die gewünschte Versteifung bewirken. Sind mehrere derartiger Rippen 32 an der Innenfläche 14 der Schutzkappe 1, insbesondere deren Stirnwand 3 angeordnet, können diese ausgehend vom Zentrum 9 sternförmig bzw. winkelig zueinander ausgerichtet sein.

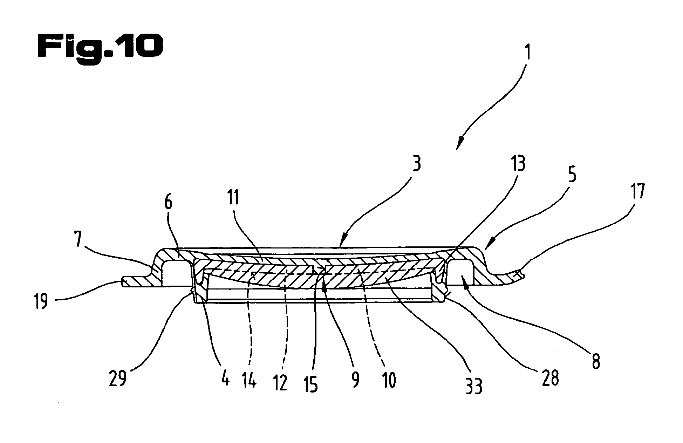

In der Fig. 10 ist eine weitere und gegebenenfalls für sich eigenständige Ausführungsform der Schutzkappe 1 gezeigt, wobei wiederum für gleiche Teile gleiche Bezugszeichen bzw. Bauteilbezeichnungen wie in den vorangegangenen Fig. 1 bis 9 verwendet werden. Um unnötige Wiederholungen zu vermeiden, wird auf die detaillierte Beschreibung in den vorangegangenen Fig. 1 bis 9 hingewiesen bzw. Bezug genommen.

Die hier gezeigte Schutzkappe 1 ist zumindest im Bereich ihrer Stirnwand 3 mehrlagig ausgebildet und umfasst die erste Lage 10, die bevorzugt damit verbundene zweite Lage 11, den Kappenmantel 4 sowie gegebenenfalls den L-förmig ausgebildeten Halteansatz 5 mit seinen Schenkeln 6, 7.

Dabei ist die erste Lage 10 wiederum als eigener, selbstständiger bevorzugt flächiger und in etwa scheibenförmiger Bauteil ausgebildet. An diesem sind an der dem optischen Gerät 2 zugewendeten Seite Rippen 33 angeordnet und bilden somit eine zusätzliche Versteifung der ersten Lage 10 aus. Der Einlageteil 12 umfasst somit die bevorzugt scheibenförmig ausgebildet erste Lage 10 sowie die daran angeformten bzw. einstückig damit verbunden Rippen 33. Die Rippen 33 können analog zu der zuvor in den Fig. 8 und 9 beschriebenen Anordnung ausgebildet sein, sind hier jedoch mit der ersten Lage 10 verbunden.

Im äußeren Umfangsbereich des Einlageteils 12 bzw. ersten Lage 10 kann wiederum der bevorzugt rohrförmige Ansatz 13 angeordnet sein, welcher vom Kappenmantel 4 aufgenommen bzw. darin eingebettet ist. Auf die Darstellung und Beschreibung der Ausnehmungen 26, 27, des Vorsprungs 28 sowie dem über das Verbindungselement 17 verbundene Befestigungselement 18 wird hier der besseren Übersichtlichkeit und Einfachheit der Zeichnung verzichtet. Diese zuvor beschriebenen Bauteile können selbstverständlich auch hier Anwendung finden.

Die Ausführungsbeispiele zeigen mögliche Ausführungsvarianten der Schutzkappe 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Schutzkappe 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 4; 5; 7; 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schutzkappe
- 2: Gerät
- 3: Stirnwand
- 4: Kappenmantel
- 5: Halteansatz

- 6: Schenkel
- 7: Schenkel
- 8: Aufnahmeraum
- 9: Zentrum
- 10: erste Lage

- 11: zweite Lage
- 12: Einlageteil
- 13: Ansatz
- 14: Innenfläche
- 15: Durchsetzung

- 16: Grundkörper
- 17: Verbindungselement
- 18: Befestigungselement
- 19: Handhabe
- 20: Fortsatz

- 21: Flansch
- 22: Stirnfläche
- 23: Spalt
- 24: Stirnfläche
- 25: Lage

- 26: Ausnehmung
- 27: Ausnehmung
- 28: Außenseite
- 29: Vorsprung
- 30: Stirnfläche

- 31: Arm
- 32: Rippe
- 33: Rippe

## Patentansprüche

1. Schutzkappe (1) für eine Objektiv- oder Okularseite eines optischen Geräts (2), wie ein Beobachtungsgerät, mit einer Stirnwand (3) und mit einem zumindest bereichsweise am äußeren Umfang der Stirnwand (3) angeordneten rohrförmigen Kappenmantel (4), wobei die Stirnwand (3) zumindest bereichsweise eine erste Lage (10) umfasst, wobei der Werkstoff der ersten Lage (10) bezüglich dem Werkstoff des Kappenmantels (4) einen dazu höheren Elastizitätsmodul aufweist, **dadurch gekennzeichnet, dass** zumindest ein Teilabschnitt der Stirnwand (3) zwei Lagen umfasst und die zweite Lage (11) der Stirnwand (3) durch den gleichen Werkstoff wie der Kappenmantel (4) gebildet ist.

2. Schutzkappe (1) nach Anspruch 1, **dadurch gekennzeichnet, dass** zumindest ein Teilabschnitt der Stirnwand (3) drei oder mehrere Lagen (10, 11) umfasst.

3. Schutzkappe (1) nach Anspruch 1 oder 2, **dadurch gekennzeichnet, dass** anschließend an den Kappenmantel (4) ein im Axialschnitt gesehen L-förmiger Halteansatz (5) angeordnet ist, der im Zusammenwirken von seinen beiden Schenkeln (6, 7) und dem Kappenmantel (4) einen bevorzugt umlaufenden Aufnahmeraum (8) begrenzt.

4. Schutzkappe (1) nach einem der vorhergehenden Ansprüche, **dadurch gekennzeichnet, dass** an einer Außenseite (28) des Kappenmantel (4) zumindest ein den Kappenmantel (4) radial überragender Vorsprung (29) angeordnet ist.

5. Schutzkappe (1) nach Anspruch 4, **dadurch gekennzeichnet, dass** der Vorsprung (29) über den Umfang des Kappenmantels (4) durchlaufend ausgebildet ist.

6. Schutzkappe (1) nach einem der vorhergehenden Ansprüche, **dadurch gekennzeichnet, dass** am Kappenmantel (4) an dessen Außenseite (28) zumindest eine Ausnehmung (26) ausgebildet ist, welche sich in Axialrichtung ausgehend von einer von der Stirnwand (3) abgewendeten Stirnfläche (30) des Kappenmantels (4) hin zur Stirnwand (3) erstreckt.

7. Schutzkappe (1) nach Anspruch 3, **dadurch gekennzeichnet, dass** an einer Innenseite des vom Kappenmantel (4) radial nach außen distanziert angeordneten Schenkels (7) des Halteansatzes (5) zumindest eine weitere Ausnehmung (27) ausgebildet ist, welche sich in Axialrichtung ausgehend von einer Stirnendffäche des Schenkels (7) hin zum ersten Schenkel (6) des Halteansatzes (5) erstreckt.

8. Schutzkappe (1) nach einem der Anspruch 1 oder 2, **dadurch gekennzeichnet, dass** die erste Lage (10) mit einem Elastizitätsmodul mit einer unteren Grenze von 2000 MPa und einer oberen Grenze von 210000 MPa ausgebildet ist.

9. Schutzkappe (1) nach einem der Ansprüche 1, 2 oder 8, **dadurch gekennzeichnet, dass** die erste Lage (10) aus einem Werkstoff der Gruppe von Kunststoff, Metall, Metalllegierungen, Holz oder einem holzähnlichen Werkstoff, Glas, Keramik gewählt ist.

10. Schutzkappe (1) nach einem der Ansprüche 1, 2 oder 9, **dadurch gekennzeichnet, dass** die erste Lage (10) als ein Einlageteil (12) ausgebildet ist und zumindest bereichsweise vom Werkstoff zur Bildung der zweiten Lage (11) umgeben, insbesondere in die zweite Lage (11) eingebettet ist.

11. Schutzkappe (1) nach einem der Ansprüche 1, 2 oder 8 bis 10, **dadurch gekennzeichnet, dass** die erste Lage (10) als ein Einlageteil (12) ausgebildet ist und zumindest bereichsweise mit dem Werkstoff der zweiten Lage (11) verbunden, insbesondere die zweite Lage (11) daran angespritzt oder angeformt, ist.

12. Schutzkappe (1) nach einem der Ansprüche 1, 2 oder 8 bis 11, **dadurch gekennzeichnet, dass** die erste Lage (10) oder der Einlageteil (12) weiters einen rohrförmig ausgebildeten Ansatz (13) umfasst und der Ansatz (13) im Kappenmantel (4) eingebettet ist

13. Schutzkappe (1) nach einem der Ansprüche 1, 2 oder 8 bis 12, **dadurch gekennzeichnet, dass** die erste Lage (10) oder der Einlageteil (12) im Axialschnitt gesehen ausgehend von einem äußeren Umfang hin zu einem Zentrum (9) auf die dem abzudeckenden optischen Gerät (2) zugewendete Seite bombiert, insbesondere bogenförmig gekrümmt, ausgebildet ist.

14. Schutzkappe (1) nach einem der Ansprüche 1, 2 oder 8 bis 13, **dadurch gekennzeichnet, dass** an der ersten Lage (10) oder am Einlageteil (12) an der dem abzudeckenden optischen Gerät (2) zugewendete Seite eine Rippe (31) angeordnet ist.

15. Schutzkappe (1) nach einem der Ansprüche 1, 2 oder 8 bis 14, **dadurch gekennzeichnet, dass** die erste Lage (10) oder der Einlageteil (12) der Stirnwand (3) an der dem abzudeckenden optischen Gerät (2) zugewendete Seite angeordnet ist.

16. Schutzkappe (1) nach einem der Ansprüche 1, 2 oder 8 bis 15, **dadurch gekennzeichnet, dass** die erste Lage (10) oder der Einlageteil (12) zumindest in seinem Zentrum (9) eine Durchsetzung (15) aufweist, in welche der Werkstoff der zweiten Lage (11) hineinragt.

17. Schutzkappe (1) nach einem der Ansprüche 1, 2 oder 8 bis 14, **dadurch gekennzeichnet, dass** die erste Lage (10) oder der Einlageteil (12) der Stirnwand (3) an der vom abzudeckenden optischen Gerät (2) abgewendeten Seite angeordnet ist.

18. Schutzkappe (1) nach Anspruch 17, **dadurch gekennzeichnet, dass** die erste Lage (10) oder der Einlageteil (12) zumindest einen Fortsatz (20) aufweist, der in den Werkstoff der zweiten Lage (11) hineinragt.

19. Schutzkappe (1) nach Anspruch 18, **dadurch gekennzeichnet, dass** der Fortsatz (20) im Zentrum (9) der ersten Lage (10) oder des Einlageteils (12) angeordnet ist.

20. Schutzkappe (1) nach Anspruch 3, Anspruch 12 und einem der Ansprüche 17 bis 19, **dadurch gekennzeichnet, dass** die erste Lage (10) oder der Einlageteil (12) flächig ausgebildet ist und weiters an seinem äußeren Umfangsbereich einen den rohrförmig ausgebildeten Ansatz (13) radial überragenden Flansch (21) umfasst und sich der Flansch (21) in den L-förmigen Halteansatz (5) hinein erstreckt.

21. Schutzkappe (1) nach einem der Ansprüche 17 bis 20, **dadurch gekennzeichnet, dass** der Werkstoff der zweiten Lage (11) im Bereich einer vom Zentrum (9) abgewendeten Stirnfläche (24) des Einlageteils (12) oder einer Stirnfläche (22) des Flansches (21) radial distanziert davon angeordnet ist.

22. Schutzkappe (1) nach Anspruch 3, **dadurch gekennzeichnet, dass** die zweite Lage (11) der Stirnwand (3), der Kappenmantel (4) und der Halteansatz (5) einen einzigen zusammengehörigen Grundkörper (16) bilden und dieser aus einem elastomeren Werkstoff wie Silikone (synthetische Polymere) insbesondere z.B. Silikon 70 Shore A oder Silikonkautschuke oder Silikongummi, Gummi wie Naturkautschuk oder synthetischer Kautschuk insbesondere Nitrilkautschuk (NBR) oder Styrol-Butadien Kautschuk (SBR), thermoplastische Elastomere (TPE) gebildet ist.

23. Schutzkappe (1) nach einem der Ansprüche 1, 2 oder 21, 22, **dadurch gekennzeichnet, dass** die zweite Lage (11) mit einer Shore-Härte A mit einer unteren Grenze von 50 und einer oberen Grenze von 80 ausgebildet ist.

## Claims

1. Protective cap (1), in particular a lens or ocular end of an optical device (2), such as an observation device, with an end wall (3) and with an tubular cap casing (4) disposed around at least certain regions of the external circumference of the end wall (3), and at least certain regions of the end wall (3) comprise a first layer (10), and the material of the first layer (10) has a higher modulus of elasticity than the material of the cap casing (4), wherein at least a partial portion of the end wall (3) comprises two layers, and the second layer (11) of the end wall (3) is made from the same material as the cap casing (4).

2. Protective cap (1) according to claim 1, wherein at least a partial portion of the end wall (3) comprises three or more layers (10, 11).

3. Protective cap (1) according to claim 1 or 2, wherein an L-shaped retaining shoulder (5) is disposed adjoining the cap casing (4) as viewed in axial section, which in co-operation with its two legs (6, 7) and the cap casing (4) bounds a preferably circumferentially extending housing compartment (8).

4. Protective cap (1) according to one of the preceding claims, wherein at least one projection (29) is disposed on an external face (28) of the cap casing (4) projecting radially out from the cap casing (4).

5. Protective cap (1) according to claim 4, wherein the projection (29) extends continuously around the circumference of the cap casing (4).

6. Protective cap (1) according to one of the preceding claims, wherein at least one cut-out (26) is disposed on the cap casing (4) on its external face (28), which extends in the axial direction from an end face (30) of the cap casing (4) facing the end wall (3) as far as the end wall (3).

7. Protective cap (1) according to claim 3, wherein at least one other cut-out (27) is provided on an internal face of the leg (7) of the retaining shoulder (5) spaced at a distance radially outwards from the cap casing (4), which extends in the axial direction from a terminal end face of the leg (7) as far as the first leg (6) of the retaining shoulder (5).

8. Protective cap (1) according to one of claims 1 or 2, wherein the first layer (10) has a modulus of elasticity with a lower limit of 2000 MPa and an upper limit of 210000 MPa.

9. Protective cap (1) according to one of claims 1, 2 or 8, wherein the first layer (10) is made from a material selected from the group comprising plastic, metal, metal alloys, wood or a timber-like material, glass, ceramic.

10. Protective cap (1) according to one of claims 1, 2 or 9, wherein the first layer (10) is provided in the form of an insert part (12) and is surrounded by the material used to form the second layer (11) in at least certain regions, in particular is embedded in the second layer (11).

11. Protective cap (1) according to one of claims 1, 2 or 8 to 10, wherein the first layer (10) is provided in the form of an insert part (12) and is joined to the material of the second layer (11) in at least certain regions, in particular is injection molded or molded onto the second layer (11).

12. Protective cap (1) according to one of claims 1, 2 or 8 to 11, wherein the first layer (10) or insert part (12) also has a tubular shoulder (13) and the shoulder (13) is embedded in the cap casing (4).

13. Protective cap (1) according to one of claims 1, 2 or 8 to 12, wherein the first layer (10) or insert part (12) is cambered as viewed in axial section, starting from an external circumference to a center (9) on the side facing the optical device (2) to be covered, in particular is arcuately curved.

14. Protective cap (1) according to one of claims 1, 2 or 8 to 13, wherein a rib (31) is provided on the first layer (10) or on the insert part (12) on the side facing the optical device (2) to be covered.

15. Protective cap (1) according to one of claims 1, 2 or 8 to 14, wherein the first layer (10) or insert part (12) of the end wall (3) is disposed on the side facing the optical device (2) to be covered.

16. Protective cap (1) according to one of claims 1, 2 or 8 to 15, wherein the first layer (10) or insert part (12) has at least one orifice (15) at its center (9) through which the material of the second layer (11) extends.

17. Protective cap (1) according to one of claims 1, 2 or 8 to 14, wherein the first layer (10) or insert part (12) of the end wall (3) is disposed on the side facing away from the optical device (2) to be covered.

18. Protective cap (1) according to claim 17, wherein the first layer (10) or insert part (12) has at least one projection (20) which extends into the material of the second layer (11).

19. Protective cap (1) according to claim 18, wherein the projection (20) is disposed at the center (9) of the first layer (10) or insert part (12).

20. Protective cap (1) according to claim 3, claim 12 and one of claims 17 to 19, wherein the first layer (10) or insert part (12) is of a flat design and also has a flange (21) in its external circumferential region projecting radially out from the tubular shoulder (13) and the flange (21) extends into the L-shaped retaining shoulder (5).

21. Protective cap (1) according to one of claims 17 to 20, wherein the material of the second layer (11) is disposed in the region of an end face (24) of the insert part (12) or an end face (22) of the flange (21) facing away from the center (9) disposed at a distance radially apart from it.

22. Protective cap (1) according to claim 3, wherein the second layer (11) of the end wall (3), the cap casing (4) and the retaining shoulder (5) constitute a single cohesive main body (16) and it is made from an elastomeric material such as silicone (synthetic polymers), in particular silicone 70 Shore A for example, or silicone caoutchouc or silicone rubber, rubber such as natural rubber or synthetic rubber, in particular nitrile rubber (NBR) or styrene-butadiene rubber (SBR), thermoplastic elastomers (TPE).

23. Protective cap (1) according to one of claims 1, 2 or 21, 22, wherein the second layer (11) has a Shore hardness A with a lower limit of 50 and an upper limit of 80.

## Revendications

1. Couvercle de protection (1) pour la face d'un objectif ou oculaire d'un appareil optique (2), tel qu'un appareil d'observation, comportant une paroi frontale (3) et une paroi périphérique (4) tubulaire, disposée au moins par zones sur le pourtour extérieur de la paroi frontale (3), ladite paroi frontale (3) comprenant au moins par zones une première couche (10), le matériau de la première couche (10) ayant un module d'élasticité supérieur à celui du matériau de la paroi périphérique (4), **caractérisé en ce qu'**au moins une portion de la paroi frontale (3) comprend deux couches, et la deuxième couche (11) de la paroi frontale (3) est réalisée dans le même matériau que la paroi périphérique (4) du couvercle.

2. Couvercle de protection (1) selon la revendication 1, **caractérisé en ce qu'**au moins une portion de la paroi frontale (3) comprend trois couches (10, 11) ou davantage.

3. Couvercle de protection (1) selon la revendication 1 ou 2, **caractérisé en ce que** dans le prolongement de la paroi périphérique (4) du couvercle est agencé un talon de fixation (5), en forme de L sur une coupe axiale, qui, par la coopération de ses deux branches (6, 7) avec la paroi périphérique (4) du couvercle, délimite un logement (8) de préférence périphérique.

4. Couvercle de protection (1) selon l'une quelconque des revendications précédentes, **caractérisé en ce que** sur une face extérieure (28) de la paroi périphérique (4) du couvercle est agencée au moins une saillie (29) s'avançant radialement au-delà de la paroi périphérique (4) du couvercle.

5. Couvercle de protection (1) selon la revendication 4, **caractérisé en ce que** la saillie (29) est réalisée en continu sur tout le pourtour de la paroi périphérique (4) du couvercle.

6. Couvercle de protection (1) selon l'une quelconque des revendications précédentes, **caractérisé en ce que** sur la face extérieure (28) de la paroi périphérique (4) du couvercle est réalisé au moins un évidement (26) qui s'étend à partir d'une face frontale (30), détournée de la paroi frontale (3), de la paroi périphérique (4) dans la direction axiale vers la paroi frontale (3).

7. Couvercle de protection (1) selon la revendication 3, **caractérisé en ce que** sur une face intérieure de la branche (7) du talon de fixation (5), située radialement vers l'extérieur à distance de la paroi périphérique (4) du couvercle, est ménagé au moins un autre évidement (27) qui s'étend à partir de la surface d'extrémité frontale de la branche (7) dans la direction axiale vers la première branche (6) du talon de fixation (5).

8. Couvercle de protection (1) selon la revendication 1 ou 2, **caractérisé en ce que** la première couche (10) est réalisée avec un module d'élasticité avec une limite inférieure de 2 000 MPa et une limite supérieure de 210 000 MPa.

9. Couvercle de protection (1) selon l'une quelconque des revendications 1, 2 ou 8, **caractérisé en ce que** la première couche (10) est réalisée dans un matériau choisi dans le groupe des matières plastiques, métaux, alliages de métal, bois ou un matériau similaire au bois, verre, céramique.

10. Couvercle de protection (1) selon l'une quelconque des revendications 1, 2 ou 9, **caractérisé en ce que** la première couche (10) est conçue sous la forme d'un insert (12) et est entourée au moins par zones par le matériau destiné à former la deuxième couche (11), en particulier est encastrée dans la deuxième couche (11).

11. Couvercle de protection (1) selon l'une quelconque des revendications 1, 2 ou 8 à 10, **caractérisé en ce que** la première couche (10) est conçue sous la forme d'un insert (12) et est reliée au moins par zones avec le matériau de la deuxième couche (11), en particulier la deuxième couche (11) est surmoulée ou est formée sur ladite première couche.

12. Couvercle de protection (1) selon l'une quelconque des revendications 1, 2 ou 8 à 11, **caractérisé en ce que** la première couche (10) ou l'insert (12) comporte, en outre, une saillie (13) tubulaire et ladite saillie (13) est encastrée dans la paroi périphérique (4) du couvercle.

13. Couvercle de protection (1) selon l'une quelconque des revendications 1, 2 ou 8 à 12, **caractérisé en ce que** la première couche (10) ou l'insert (12), sur la face orientée vers l'appareil optique (2) à couvrir, est réalisé, par référence à une coupe axiale, sous forme bombée, en particulier courbée en arc, à partir d'un pourtour extérieur jusque vers un centre (9).

14. Couvercle de protection (1) selon l'une quelconque des revendications 1, 2 ou 8 à 13, **caractérisé en ce qu'**une nervure (31) est agencée sur la première couche (10) ou sur l'insert (12) sur la face orientée vers l'appareil optique (2) à couvrir.

15. Couvercle de protection (1) selon l'une quelconque des revendications 1, 2 ou 8 à 14, **caractérisé en ce que** la première couche (10) ou l'insert (12) de la paroi frontale (3) est disposé sur la face orientée vers l'appareil optique (2) à couvrir.

16. Couvercle de protection (1) selon l'une quelconque des revendications 1, 2 ou 8 à 15, **caractérisé en ce que** la première couche (10) ou l'insert (12) comporte, au moins en son centre (9), un passage (15), dans lequel s'engage le matériau de la deuxième couche (11).

17. Couvercle de protection (1) selon l'une quelconque des revendications 1, 2 ou 8 à 14, **caractérisé en ce que** la première couche (10) ou l'insert (12) de la paroi frontale (3) est disposé sur la face détournée de l'appareil optique (2) à couvrir.

18. Couvercle de protection (1) selon la revendication 17, **caractérisé en ce que** la première couche (10) ou l'insert (12) comporte au moins une saillie (20) qui s'engage dans le matériau de la deuxième couche (11).

19. Couvercle de protection (1) selon la revendication 18, **caractérisé en ce que** la saillie (20) est disposée au niveau du centre (9) de la première couche (10) ou de l'insert (12).

20. Couvercle de protection (1) selon la revendication 3, la revendication 12 et l'une quelconque des revendications 17 à 19, **caractérisé en ce que** la première couche (10) ou l'insert (12) est plan et comprend, en outre, sur sa zone périphérique extérieure, une bride (21) qui s'avance radialement au-delà de la saillie (13) tubulaire et ladite bride (21) s'étend vers l'intérieur du talon de fixation (5) en forme de L.

21. Couvercle de protection (1) selon l'une quelconque des revendications 17 à 20, **caractérisé en ce que** le matériau de la deuxième couche (11) dans la zone d'une face frontale (24) de l'insert (12), détournée du centre (9), ou d'une face frontale (22) de la bride (21) est disposé à une distance radiale desdites faces frontales.

22. Couvercle de protection (1) selon la revendication 3, **caractérisé en ce que** la deuxième couche (11) de la paroi frontale (3), la paroi périphérique (4) du couvercle et le talon de fixation (5) forment un seul corps de base (16) correspondant et celui-ci est réalisé dans un matériau élastomère, tel que des silicones (polymères synthétiques), en particulier tel que le silicone 70 Shore A ou des caoutchoucs siliconés ou des gommes siliconées, la gomme, telle que le caoutchouc naturel ou le caoutchouc synthétique, en particulier le caoutchouc nitrile (NBR) ou le styrène-butadiène (SBR), des élastomères thermoplastiques (TPE).

23. Couvercle de protection (1) selon l'une quelconque des revendications 1, 2 ou 21, 22, **caractérisé en ce que** la deuxième couche (11) est réalisée avec une dureté Shore A avec une limite inférieure de 50 et une limite supérieure de 80.
